# EUROPEAN PATENT APPLICATION

(11) **EP 4 282 568 A1**
(43) Date of publication of application: **29.11.2023**
(21) Application number: 23171400.7
(22) Date of filing: 03.05.2023
(51) Int. Cl.: B23H 1/06, B23H 1/10, B23H 7/38, B23H 9/10, B23H 9/14

(54) **MAGNETORHEOLOGICAL ELECTRICAL DISCHARGE MACHINING ELECTRODE**

(30) Priority: 17.05.2022 US 202217745989
(71) Applicant: Hamilton Sundstrand Corporation, Charlotte, NC 28217-4578 (US)
(72) Inventor: PUGLIESE, Jordan Christopher, Woodstock, 60098 (US); MIRONETS, Sergey, Philadelphia, 19130-3942 (US); KARLEN, Eric, Rockford, 61114 (US)
(74) Representative: Dehns

(57) **Abstract**

A method of improving an internal surface topography of a manufactured workpiece includes filling a workpiece with an electrically conductive magnetorheological (MR) fluid. The workpiece includes at least one internal feature having an inner surface with at least one irregularity. The method further includes converting the MR fluid into a rigid MR material, applying a voltage to the rigid MR material, and ablating the inner surface in response to the voltage to remove the at least one irregularity.

## Description

### BACKGROUND

Exemplary embodiments pertain to the art of structure component fabrication, and more particularly, to electrical discharge machining (EDM).

Electric discharge machining, or "EDM," is an established method and apparatus utilized for machining metal. The process operates through the utilization of an electrical discharge to remove metal from the workpiece. In the EDM process, an electrode is brought into close proximity to the workpiece surrounded by a dielectric, and voltage is applied in pulses at high frequency. The dielectric interface creates sparking at generally the closest position between the workpiece and the electrode. Particles are removed from the workpiece when sparking interacts with the workpiece (e.g., when the electrical sparking is quenched).

### BRIEF DESCRIPTION

According to a non-limiting embodiment, a method of improving an internal surface topography of a manufactured workpiece comprises filling a workpiece with an electrically conductive magnetorheological (MR) fluid. The workpiece includes at least one internal feature having an inner surface with at least one irregularity. The method further comprises converting the MR fluid into a rigid MR material, applying a voltage to the rigid MR material, and ablating the inner surface in response to the voltage to remove the at least one irregularity.

The method further includes one or more additional features wherein removing the at least one irregularity converts the inner surface from a rough surface into a smoothened inner surface having a reduced number of irregularities.

The method further includes one or more additional features wherein including converting the MR fluid into a rigid MR material comprises applying a magnetic field to the MR fluid. The MR fluid is converted into the rigid MR material in response to receiving energy of the magnetic field.

The method further includes one or more additional features, wherein the magnetic field is continually applied while applying the voltage to the rigid MR material.

The method further includes one or more additional features, ablating the inner surface is performed during a time period during which the voltage is applied.

The method further includes one or more additional features further comprising converting the rigid MR material into the MR fluid after the time period expires, and removing the MR fluid from the at least one internal feature of the workpiece.

The method further includes one or more additional features, wherein converting the rigid MR material into the MR fluid comprises removing the magnetic field from the rigid MR material.

The method further includes one or more additional features, wherein filling the workpiece with the MR fluid comprises submerging workpiece in a MR fluid container that contains the MR fluid such that the MR fluid fills the at least one internal feature.

The method further includes one or more additional features including applying the voltage while the workpiece is submerged in the MR fluid.

According to another non-limiting embodiment, a method is provided to improve an internal surface topography of a manufactured workpiece. The method comprises applying a magnetic field to a workpiece that includes at least one internal feature having an inner surface with at least one irregularity formed thereon that defines a roughness of the inner surface, the internal feature filled with an electrically conductive magnetorheological (MR) fluid, and converting the MR fluid into a rigid MR material in response to applying the magnetic field. The method further comprises applying a voltage to the rigid MR material, and ablating the inner surface in response to the voltage to remove the at least one irregularity.

The method further includes one or more additional features, wherein removing the at least one irregularity reduces the roughness of the inner surface.

The method further includes one or more additional features, wherein the magnetic field is continually applied while applying the voltage to the rigid MR material.

The method further includes one or more additional features, wherein ablating the inner surface is performed during a time period during which the voltage is applied.

The method further includes one or more additional features including converting the rigid MR material into the MR fluid after the time period expires, and removing the MR fluid from the at least one internal feature of the workpiece.

The method further includes one or more additional features, wherein converting the rigid MR material into the MR fluid comprises removing the magnetic field from the rigid MR material.

According to yet another non-limiting embodiment, a magnetorheological (MR) electrode comprises a workpiece including an internal region, and an electrically conductive MR fluid disposed in the internal region, the MR fluid configured to operate in a fluid state when in a non-energized state and to operate in a rigid material state when in an energized state.

The MR electrode further comprises one or more additional features, wherein the MR fluid comprises MR particles, a dielectric fluid, and an electrode material.

### BRIEF DESCRIPTION OF THE DRAWINGS

The following descriptions should not be considered limiting in any way. With reference to the accompanying drawings, like elements are numbered alike:
FIG. 1 is a block diagram of an additive electrical discharge machining system including a magnetorheological EDM electrode according to a non-limiting embodiment;
FIG. 2 is a block diagram of an additive electrical discharge machining system including a magnetorheological EDM electrode according to a non-limiting embodiment;
FIG. 3 depicts workpiece including internal features with non-treated internal surfaces according to a non-limiting embodiment;
FIG. 4 depicts a portion of a non-treated internal surface included in the workpiece of FIG. 3 according to a non-limiting embodiment;
FIG. 5 depicts the workpiece illustrated in FIG. 3 while filling the internal features with an magnetorheological fluid according to a non-limiting embodiment;
FIGS. 6A and 6B depict the workpiece illustrated in FIG. 3 after filling the internal features with the magnetorheological fluid according to a non-limiting embodiment;
FIG. 7 depicts the magnetorheological-filled workpiece illustrated in FIGS. 6A and 6B while applying a magnetic field to the workpiece to solidify the magnetorheological fluid according to a non-limiting embodiment;
FIG. 8 depicts the workpiece while performing an EDM process that uses the solidified magnetorheological material filling the internal features to treat the inner surfaces according to a non-limiting embodiment;
FIG. 9 depicts the workpiece after removing the magnetic field and flushing the magnetorheological fluid from the internal features according to a non-limiting embodiment;
FIG. 10 depicts the workpiece including internal features having treated inner surfaces with reduced irregularities and improved smoothness according to a non-limiting embodiment; and
FIG. 11 depicts a portion of the treated internal surface included in the workpiece of FIG. 10 according to a non-limiting embodiment.

### DETAILED DESCRIPTION

A detailed description of one or more embodiments of the disclosed apparatus and method are presented herein by way of exemplification and not limitation with reference to the Figures. The diagrams depicted herein are illustrative. There can be many variations to the diagram or the operations described therein without departing from the spirit of the invention. For instance, the actions can be performed in a differing order or actions can be added, deleted or modified. Also, the term "coupled" and variations thereof describes having a communications path between two elements and does not imply a direct connection between the elements with no intervening elements/connections between them. All of these variations are considered a part of the specification.

Turning now to an overview of the technology related to the present disclosure, although AM is capable of fabricating end-use products such as heat exchanges, fabricated components produced using conventional AM techniques and conventional EDM techniques can have poor internal surface finishes. When considering fabricated heat exchangers, for example, poor internal surface finishes can cause excessive pressure drops, which compromise the AM heat exchanger's cooling efficiency. Conventional EDM techniques can also cause asperities and excessive surface roughness that may increase component stress points. The increased stress points can increase structural fatigue, thereby reducing the operating life of the fabricated device.

Various non-limiting embodiments of the present disclosure provide a magnetorheological (MR) EDM electrode capable of conforming to an inner surface of internal, complex features of a workpiece. The MR EDM electrode is formed using a combination of magnetorheological particles, dielectric fluid and an electrode material. The combined electrode material becomes rigid in response to realizing a magnetic field (e.g., excitation by the energy of the magnetic field), thereby forming an in-situ MR EDM electrode that can directly contact the inner surface of a targeted internal workpiece feature. Once the MR EDM electrode is rigid, an EDM processing can be applied directly to the inner surface using to polish, ablate and remove inner surface irregularities. The magnetic field can then be removed after completing the EDM process such that the MR EDM electrode returns to a fluid state and is flushed from the workpiece. Accordingly, the previous inner surface irregularities are substantially removed or even completely removed, thereby providing a workpiece with internal features and/or internal regions having a polished and uniformly smooth inner surface.

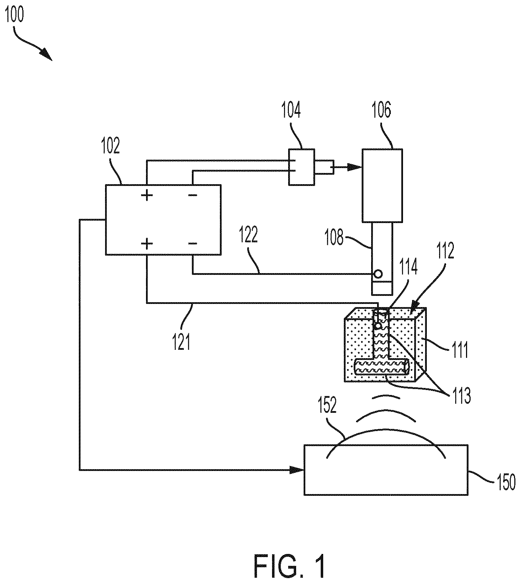

Turning now to FIG. 1, an additive electrical discharge machining (AEDM) system 100 is illustrated according to a non-limiting embodiment. The AEDM system 100 includes a power supply 102, a servo mechanism 104, a moveable EDM tool 106, and an electro-magnetic field generator 150. The workpiece 112 can be formed from various materials such as, for example, a metal material. In at least one non-limiting embodiment, the workpiece 112 is composed of a nickel-based super alloy such as, for example, Inconel 718. The workpiece 112 further includes one or more internal features and/or internal regions 113 (collectively referred as internal features) such as, for example, an internal cavity, internal compartments, etc. These internal features 113 include an inner surface having irregularities such as threads, bumps, abrasions, sharp edges, divots, etc.

In one or more non-limiting embodiments, the internal features/ internal regions 113 contain an MR fluid 114 and the MR-filled workpiece 112 is provided to the AEDM system 100. In one or more non-limited embodiments, the MR fluid 114 completely fills the internal features/ internal regions 113 of the workpiece 112. In one or more non-limiting embodiments, the MR fluid 114 is contained in the workpiece 112 prior to providing the workpiece 112 to the AEDM system. In one or more non-limiting embodiments, the AEDM system 100 can include a MR fluid filling system configured to fill (either partially or fully) the internal features/ internal regions 113 with a MR fluid. The MR fluid filling system can include a MR fluid supply, along with a MR fluid pump and nozzle/conduit configured to pump and deliver the MR fluid into the internal features/ internal regions 113 of the workpiece 112. The pump output power can be controlled to adjust the fluid output. In this manner, pressurized flow of the output MR fluid 114 can be controlled to promote complete filling of the internal features and/or internal regions 113.

The MR fluid 114 comprises magnetorheological particles, dielectric fluid, and an electrode material. The MR fluid 114 becomes rigid or "solidified" in response to receiving a magnetic field 152 generated by the magnetic field generator 150. A portion of the MR fluid 114 can be made accessible to a voltage terminal or tool having an electrode terminal to allow electrical contact thereto. Accordingly, the MR fluid 114 can be converted into a rigid MR material that serves as an in-situ MR EDM electrode, which can effectively be temporally formed integrally with a workpiece and is capable of directly contacting the inner surface of the internal features 113 of a workpiece 112 as described herein.

The moveable tool 106 operates together with the rigid MR fluid 114 to perform a surface finish improvement process to improve the topography (e.g., smoothens or polishes) of the inner surface of the internal feature 113 which cannot be directly accessed by the tool electrode 108. The servo mechanism 104 is configured to position the moveable tool 106 so that it is brought into contact with the rigid MR fluid 114 (e.g., an accessible upper surface of the in-situ electrode 116). In one or more embodiments, the servo mechanism 104 controls the position of the moveable tool 106 so that in maintains contact with the rigid MR fluid 114.

The power supply 102 includes an anode terminal 121 that delivers a positive voltage (+) and a cathode 122 that delivers a negative voltage (-). Prior to exposing the MR fluid 114 to the magnetic field 152, the anode terminal 121 can be disposed in the internal regions 113 and in contact with the MR fluid 114, while the cathode can be coupled to the tool electrode 108. The magnetic field 152 can then be applied to the workpiece 112 such that the MR fluid 114 becomes rigid as described herein.

The surface finish improvement process is initiated by applying a voltage across the anode terminal 121 and the cathode terminal 122. In at least one embodiment, the voltage induces an electrical discharge The electrical discharge is induced across the inner surface of the targeted inner feature, which ablates and erodes irregularities (e.g., threads, bumps, abrasions, sharp edges, divots, etc.). In this manner, the inner surface is polished or smoothened, thereby improving the inner surface topology of the target internal features 113. After completing the inner surface polishing, the magnetic field 152 can be removed (i.e. disconnected) . Following the removal of the magnetic field, the rigid MR material returns to a fluid form, i.e., MR fluid 114. Accordingly, the anode terminal 121 can be removed and the MR fluid 114 flushed from within the target internal features 113.

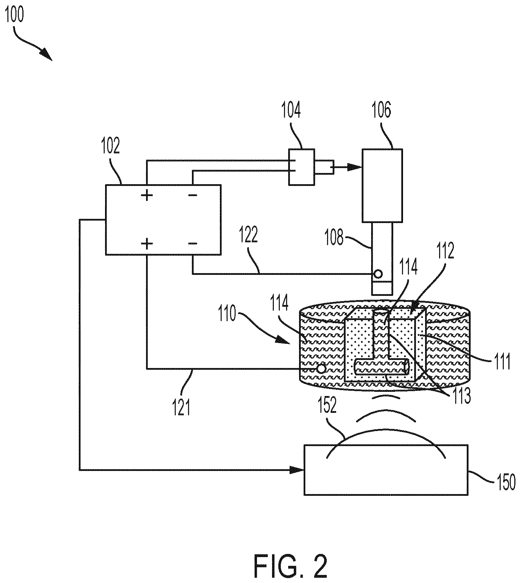

In one or more non-limiting embodiments, the additive electrical discharge machining (AEDM) system 100 can include a MR fluid container 110 as shown in FIG. 2. The MR fluid container 110 can be included in the MR fluid filling system, for example, and is configured to hold an MR fluid 114 as described herein. The workpiece 112 can be disposed in the MR fluid container 110 and submerged or immersed in the MR fluid 114. As a result, the MR fluid 114 is delivered into the internal features/internal regions 113 and contained therein. In one or more non-limiting embodiments, submerging the workpiece 112 in the MR fluid container 110 allows the MR fluid 114 to completely fill the internal features internal features/ internal regions 113. The anode terminal 121 that delivers a positive voltage (+) can conductively contact the MR fluid 114, while the cathode 122 that delivers a negative voltage (-) can conductively contact the 122 or the 112 (e.g., the external surface 111 of the workpiece). Accordingly, the EDM surface finish improvement process can be performed as described herein.

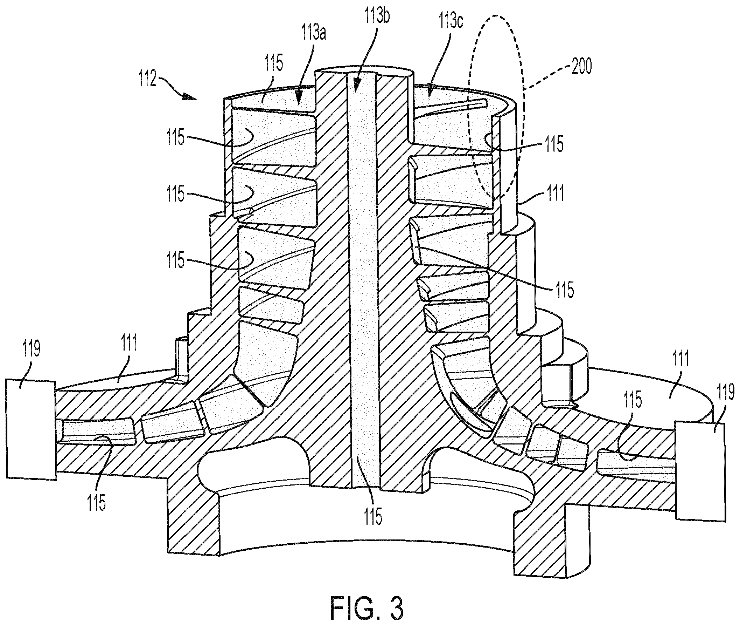

With reference now to FIGS. 3-10, a workpiece 112 including one or more internal features 113a, 113b, and 113c targeted for surface refinement is illustrated during various stages of a EDM process according to non-limiting embodiments of the present disclosure. As shown in FIG. 3, the internal features 113a, 113b and 113c (collectively referred to as 113a-113c) initially include non-treated inner surfaces 115 located opposite the external surface 111 of the workpiece 112. In one or more non-limiting embodiments, the workpiece 112 can include one or more sealing elements 119 configured to stop fluid disposed in the internal features 113a-113c from exiting the working piece 112. The sealing elements 119 can be configured as a removable element, which can be removed after the EDM process has been completed. In one or more non-limiting embodiments, the sealing element is a plug or stopper that can be inserted in the workpiece 112, or a sealant stripping that can cover one or portions of the workpiece 112.

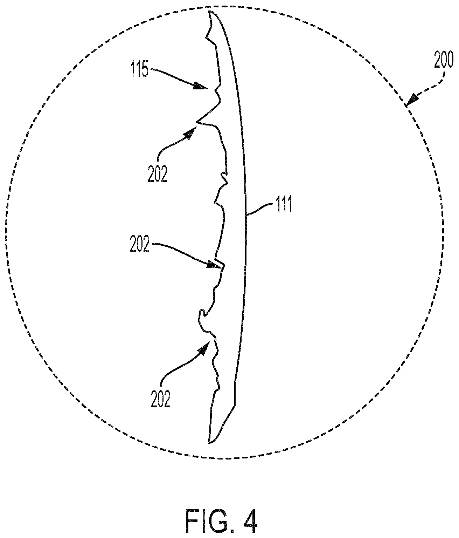

FIG. 4 shows an example of a non-treated internal surface 115 located at a portion 200 of the workpiece 112. The non-treated inner surface 115 can have formed thereon various irregularities 202. The various irregularities 202 can include, but are not limited to, threads, bumps, abrasions, sharp edges, peaks, valleys, divots, or a combination thereof.

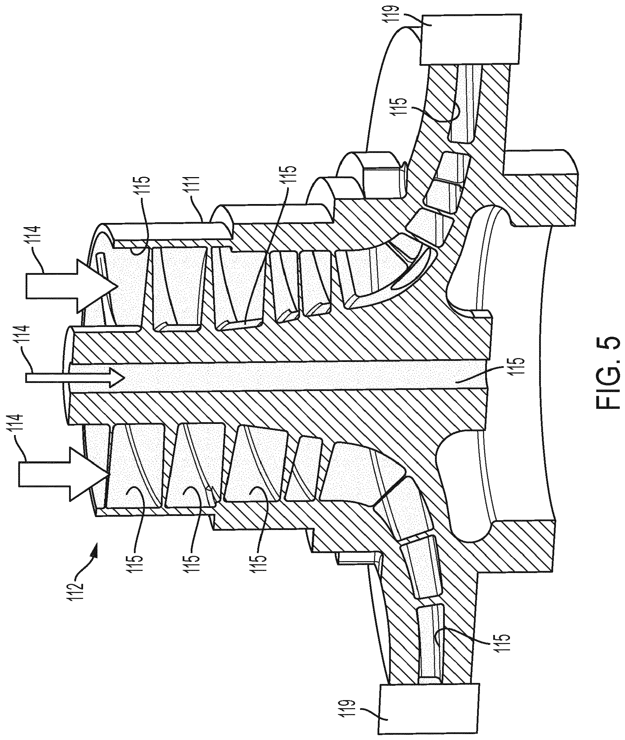

Referring to FIG. 5, an magnetorheological (MR) fluid 114 is deposited to fill the internal features 113a-113c. The MR fluid 114 is responsive to the presence of an applied magnetic field. When subjected to a magnetic field, the MR fluid becomes energized (e.g., realizes an excited state), and in turn greatly increases its apparent viscosity, to the point of becoming a viscoelastic solid, i.e., "rigid.". When the magnetic field is removed and is not energized (i.e., is no longer in an excited state), the MR fluid returns to its fluid state and can be flushed from the workpiece 112 as described in greater detail below.

In one or more non-limiting embodiments, the MR fluid 114 comprises a combination of MR particles, dielectric fluid, and an electrode material. The MR particles include, but are not limited to, iron particles, nickel particles, cobalt particles, ceramic ferrite particles, and combinations thereof. The dielectric fluid includes various known dielectric oils and serves as a carrier fluid. The electrode material includes, but is not limited to, graphite, copper, brass, zinc, and tungsten. In one or more non-limiting embodiments, the MR fluid 114 contains 50-70% graphite particles, with the remainder of the MR fluid 114 being a mixture of MR particles and dielectric oil.

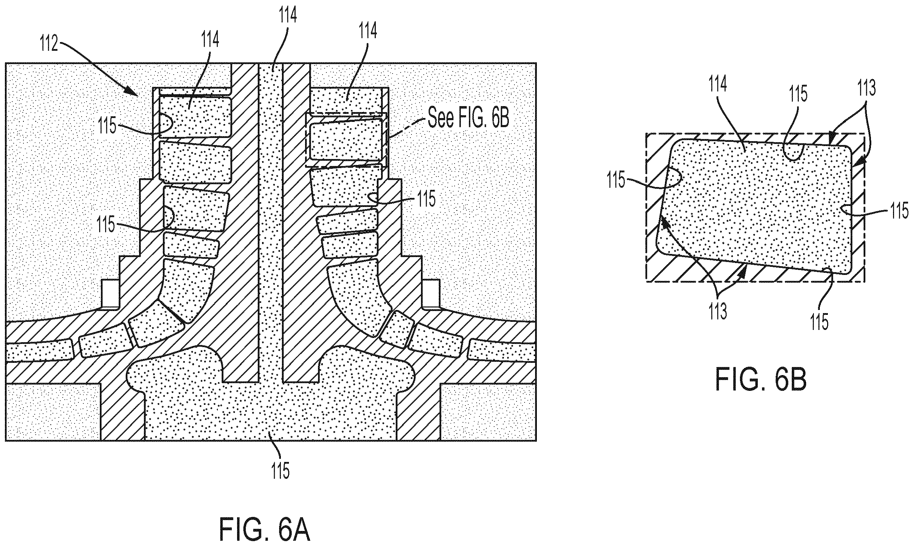

FIGS. 6A and 6B illustrate the workpiece 112 with the internal features filled with the MR fluid 114. As shown in FIGS. 6A and 6B, the MR fluid 114 completely fills the internal features 113a-113c and directly contacts all inner surfaces 115 of the internal features. In this manner, the MR fluid 114 can contact and surround the irregularities formed on the inner surface 115.

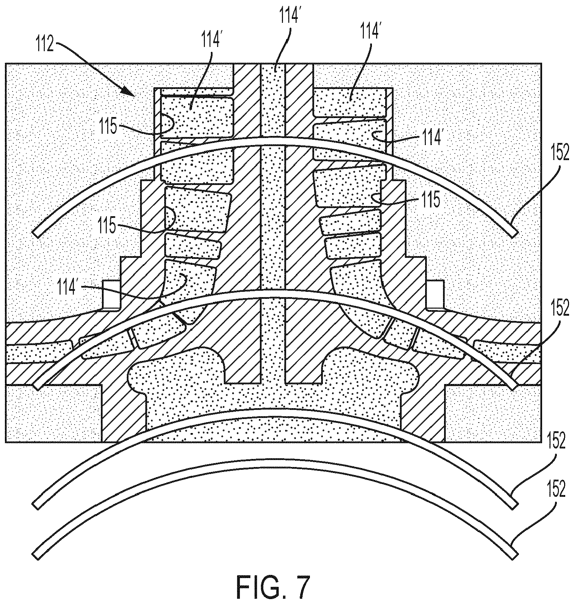

Turning to FIG. 7, while applying a magnetic field 152 to the workpiece 112 according to a non-limiting embodiment. As described herein, an electro-magnetic field generator can generate the magnetic field 152, which converts the MR fluid 114 into a rigid MR material 114' that directly contacts the inner surfaces 115 of the internal regions. Accordingly, the rigid MR material 114' can be utilized as a MR electrode configured to perform an MR EDM surface treatment process as described herein.

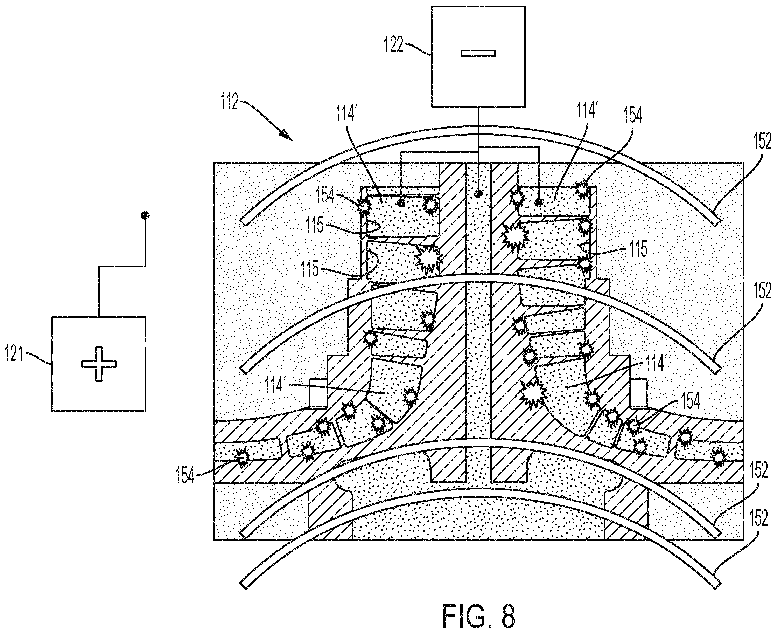

Referring to FIG. 8, the workpiece 112 is illustrated while applying a voltage to the rigid MR material 114' to perform a MR EDM process. In one or more non-limiting embodiments, the magnetic field 152 is applied constantly and/or continuously throughout the MR EDM process MR EDM process after the MR material 114' is deposited in the internal regions. Accordingly, the rigid MR material 114' serves as a MR electrode to treat the workpiece inner surfaces 115 according to a non-limiting embodiment. In one or more non-limiting embodiments, a voltage generator is connected to the rigid MR material 114' to apply the voltage. The applied voltage produces arcing 154 between the rigid MR material 114' and the inner surfaces 115. The arcing 154 effects an EDM material ablation process, which ablates and removes the irregularities (e.g., threads, bumps, abrasions, sharp edges, peaks, valleys, divots, etc.) from the inner surfaces 115 of the workpiece 112.

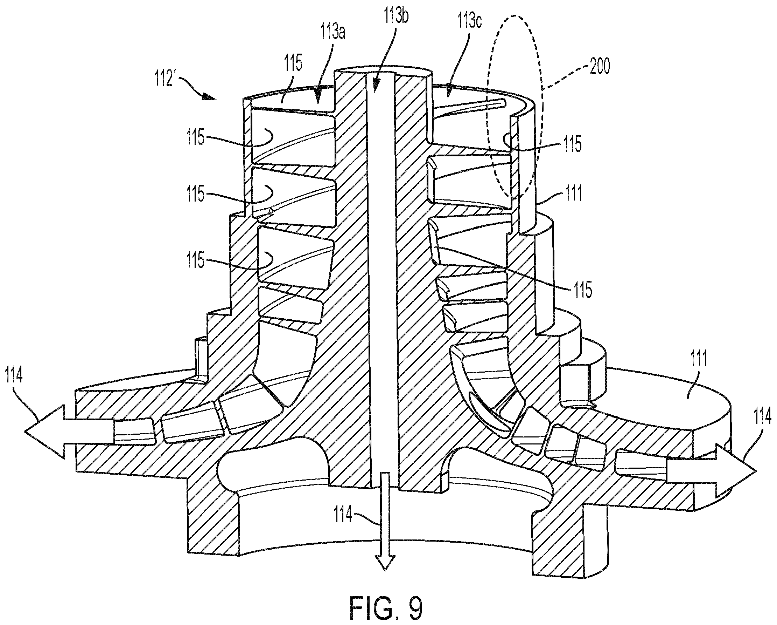

Referring now FIG. 9, the workpiece 112 is illustrated after disconnecting the voltage generator and removing the magnetic field 152. Following the removal of the magnetic field, the rigid MR material 114' returns to a fluid form, i.e., MR fluid 114. The MR fluid 114 is then flushed from the internal regions 113a-113c of the workpiece 112 as further shown in FIG. 9.

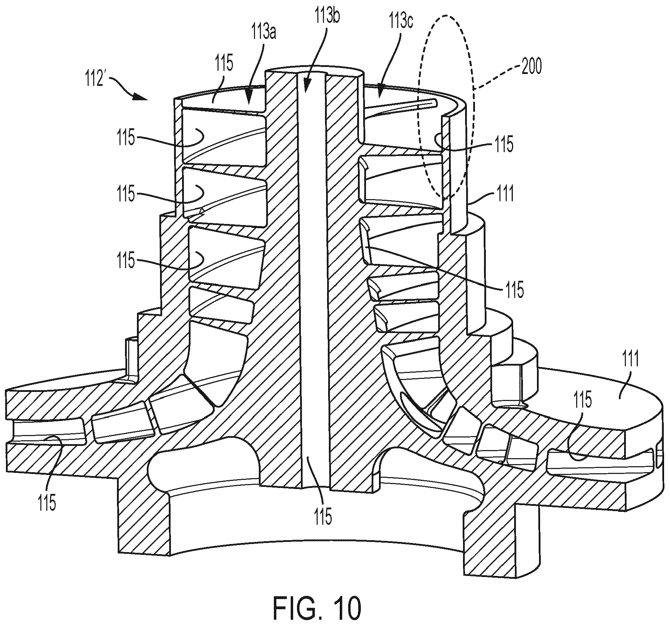

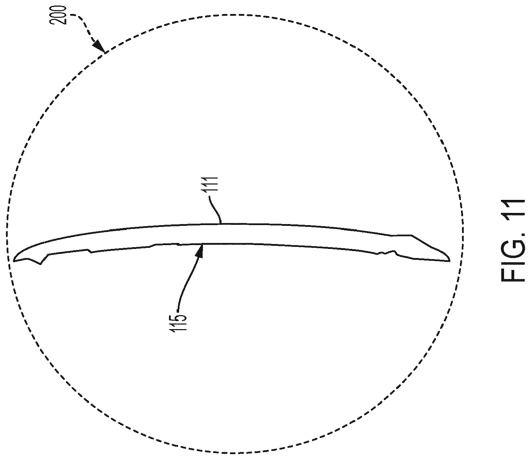

Turning to FIG. 10, a treated workpiece 112' is illustrated following completion of the MR EDM surface treatment process. The treated workpiece 112' includes internal features 113a-113c having treated inner surfaces 115 with reduced irregularities and improved smoothness according to a non-limiting embodiment. As shown in FIG. 11, for example, the irregularities 202 previously formed on the inner surface 115 are now substantially reduced or even completely removed. In one or more non-limiting embodiments, the surface improvement is on the micro-inch scale, typical to the surface finish measurement parameter "RA", also referred to as the arithmetic mean roughness value (RA). As shown in FIG. 11, the smoothness and topography of the inner surface 114 is improved uniformly through the fluid flow area of the inner regions 113a-113c. At the micro-inch scale, irregularities 202 such as peaks or jagged edges, for example, are ablated from the inner surfacer 115 via electrical arcing, resulting in a smoother finish of the inner surface 115.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. As used herein, the terms "about" and "substantially" are intended to include the degree of error associated with measurement of the particular quantity based upon the equipment available at the time of filing the application. For example, the terms may include a range of ± 8%, or 5%, or 2% of a given value or other percentage change as will be appreciated by those of skill in the art for the particular measurement and/or dimensions referred to herein. It should be appreciated that relative positional terms such as "forward," "aft," "upper," "lower," "above," "below," and the like are with reference to normal operational attitude and should not be considered otherwise limiting.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of improving an internal surface topography of a manufactured workpiece, the method comprising:
filling a workpiece with an electrically conductive magnetorheological (MR) fluid, the workpiece including at least one internal feature having an inner surface with at least one irregularity;
converting the MR fluid into a rigid MR material;
applying a voltage to the rigid MR material; and
ablating the inner surface in response to the voltage to remove the at least one irregularity.

2. The method of claim 1, wherein removing the at least one irregularity converts the inner surface from a rough surface into a smoothened inner surface having a reduced number of irregularities.

3. The method of claim 2, wherein converting the MR fluid into a rigid MR material comprises applying a magnetic field to the MR fluid, wherein the MR fluid is converted into the rigid MR material in response to receiving energy of the magnetic field.

4. The method of claim 3, wherein the magnetic field is continually applied while applying the voltage to the rigid MR material.

5. The method of claim 4, wherein ablating the inner surface is performed during a time period during which the voltage is applied.

6. The method of claim 5, further comprising:
converting the rigid MR material into the MR fluid after the time period expires; and
removing the MR fluid from the at least one internal feature of the workpiece.

7. The method of claim 6, wherein converting the rigid MR material into the MR fluid comprises removing the magnetic field from the rigid MR material.

8. The method of any preceding claim, wherein filling the workpiece with the MR fluid, comprises submerging workpiece in a MR fluid container that contains the MR fluid such that the MR fluid fills the at least one internal feature.

9. The method of claim 8, further comprising applying the voltage while the workpiece is submerged in the MR fluid.

10. A method of improving an internal surface topography of a manufactured workpiece, the method comprising:
applying a magnetic field to a workpiece that includes at least one internal feature having an inner surface with at least one irregularity formed thereon that defines a roughness of the inner surface, the internal feature filled with an electrically conductive magnetorheological (MR) fluid;
converting the MR fluid into a rigid MR material in response to applying the magnetic field;
applying a voltage to the rigid MR material; and
ablating the inner surface in response to the voltage to remove the at least one irregularity.

11. The method of claim 10, wherein removing the at least one irregularity reduces the roughness of the inner surface.

12. The method of claim 11, wherein the magnetic field is continually applied while applying the voltage to the rigid MR material.

13. The method of any of claims 10-12, wherein ablating the inner surface is performed during a time period during which the voltage is applied, and preferably further comprising:
converting the rigid MR material into the MR fluid after the time period expires; and
removing the MR fluid from the at least one internal feature of the workpiece, and preferably wherein converting the rigid MR material into the MR fluid comprises removing the magnetic field from the rigid MR material.

14. An magnetorheological (MR) electrode comprising:
a workpiece (112) including an internal region (113); and
an electrically conductive MR fluid (114) disposed in the internal region (113), the MR fluid (114) configured to operate in a fluid state when in a non-energized state and to operate in a rigid material state when in an energized state.

15. The MR electrode of claim 14, wherein the MR fluid (114) comprises:
MR particles;
a dielectric fluid; and
an electrode material.
